# EUROPEAN PATENT APPLICATION

(11) **EP 4 455 816 A1**
(43) Date of publication of application: **30.10.2024**
(21) Application number: 23170257.2
(22) Date of filing: 27.04.2023
(51) Int. Cl.: G05B 19/418

(54) **BARCODE SCAN FUNCTIONALITY**

(71) Applicant: Siemens Aktiengesellschaft, 80333 München (DE)
(72) Inventor: Barabási, Zoltán, 1094 Budapest (HU); Berényi, Zsolt, 7761 Kozármisleny (HU); Kovács, Ádám3, 2022 Tahitótfalu (HU)
(74) Representative: Siemens Patent Attorneys

(57) **Abstract**

Present invention concerns a method of operating an electronic device (16), the method comprising: obtaining input control information based on an information pattern (14, 20); determining a control indicator based on the input control information, the control indicator indicating operation control information to be used by a manufacturing equipment (12); providing the control indicator to an electronic control system associated to the manufacturing equipment (12). The invention also concerns related devices.

## Description

Present invention concerns approaches of providing information to or pertaining to manufacturing equipments.

### Background of the Invention

Manufacturing equipment like CNC (Computerized Numerical Control) machines can perform a range of different functionalities or processing types. For each functionality of processing, it may need operation control information, like software or program, e.g., in the form of a NC (Numerical Control) program or package. The operation control information may need to be installed and/or updated for specific processing according to an order; the order may indicate which processing and/or operation control information may be needed. Different orders may require different operation control information.

### Disclosure of the Invention

A problem underlying the invention consists in providing an improved technique to provide manufacturing equipment with operation control information like software, and/or indicating the applicable operation control information for manufacturing equipment, e.g., according to an order.

The invention solves the given problem by means of subject-matter defined in enclosed independent claims. Dependent claims describe preferred embodiments.

There is disclosed a method of operating an electronic device; the electronic device may perform the method and/or actions of the method. The method comprises obtaining input control information based on an information pattern. The method further comprises determining a control indicator based on the input control information, the control indicator indicating operation control information to be used by a manufacturing equipment. Moreover, the method comprises providing the control indicator to an electronic control system associated to the manufacturing equipment. Accordingly, easy management of operation control information for manufacturing equipment is provided. Approaches described herein may facilitate upgrade of existing systems with low effort and cost, and/or may lower handling efforts by operators.

It may be considered that the manufacturing equipment may be a Computerized Numerical Control, CNC, equipment, and/or the control indicator may indicate a Numerical Control, NC, packet or package, e.g., G-code. Such equipment and operation control information may be particularly suitable for functionality provided. The operation control information may generally be one of a set of available operation control information options, e.g., a set of NC programs or NC program packages or set control information packets or packages.

The input control information, or input in general, may be obtained based on optical sensing or scanning of information and/or the information pattern, for example by a camera and/or a barcode reader or QR reader or pattern reader. The information pattern may be represented by a barcode, or QR code, or graphical pattern in general.

A graphical pattern may encode information visually, e.g., non-readable by an operator, and/or non-alphabetically or non-numerically. Alternatively, or additionally, the information may be obtained based on radio technology, e.g., Near-Field Communication (NFC)-based technology and/or RFID (Radio Frequency Identification), which may provide an information pattern in form of radio signals, which may be an information pattern to represent the information.

Accordingly, obtaining the input and/or obtaining the input control information may be simplified, in particular in comparison to manual input. Obtaining input control information based on an information pattern in general may comprise extracting information from the information pattern, e.g., decoding the pattern. The pattern may generally be obtained based on, and/or comprising, being received and/or scanned and/or sensed.

In some variants, the manufacturing equipment may be determined, for example, based on the input control information or information pattern, and/or second input control information, and/or second information pattern. Alternatively, or additionally, the control indicator may also indicate the manufacturing equipment, e.g., based on preceding determination.

Indicating the manufacturing equipment may comprise, and/or correspond to, indicating the type of equipment, e.g., based on processing capability and/or compatible operation control information. Alternatively, or additionally, it may comprise, and/or correspond to, indicating the exact equipment, e.g., out of a number of available equipments, for example in a manufacturing plant with multiple equipments and/or equipment types. In particular, it may indicate the specific equipment or machine which is supposed to be provided with, and/or to run, the operation control information. Thus, more complete and/or precise information may be provided, and targeted installation may be provided.

It may be considered that the control indicator may indicate operation control information executable by the manufacturing equipment and/or electronic control or processing circuitry associated thereto, and/or operation control information operable to control the manufacturing equipment. The operation control information may be specific for the processing functionality aimed for by an order. For example, it may be a NC program or packet for a CNC machine or equipment. Alternatively, or additionally, the control indicator, and/or the input, and/or input control information, may indicate a version of operation control information. Thus, compatibility and desired functionality may be provided.

The control indicator, and/or input, and/or input control information, may indicate desired processing to be performed by the manufacturing equipment. For example, it may indicate what to manufacture, and/or how to process material, and/or how many objects to manufacture or how much material processing to perform, e.g., in terms of number of manufacturing processes and/or items to produce. The control indicator may indicate such information based on obtaining and/or processing the information pattern.

Alternatively, or additionally, the control indicator may comprise multiple entries, and/or multiple packets of information, and/or multiple transmissions. Any number of data packages and/or transmissions of data corresponding to information represented by a control indicator may be considered part of the control indicator. It may represent a plurality of bit fields and/or bytes and/or information or information types, and/or may represent one or more strings and/or integers and/or arrays, or other data structures. A control indicator may in general be provided utilising radio technology or infrared technology, e.g., based on WiFi, and/or a 3GPP radio standard like LTE (Long-Term Evolution) and/or NR (New Radio) or IoT (Internet of Things). This may enable easy handling by an operator.

The method may also comprise operating the manufacturing equipment based on the control indicator. This may be controlled and/or performed by the electronic control system, and/or by another component of the electronic control system than the electronic device. Operating may comprise executing the operation control information on the manufacturing equipment and/or operating the manufacturing equipment based on the operation control information, and/or manufacturing one or more objects and/or processing material controlled by, and/or according to, the operation control information. In this context, the method may be seen to be performed by a larger system, e.g., comprising the electronic control system.

In some cases, operating may comprise selecting operation control information based on the control indicator. Selecting may be out of a set of available operation control information options (e.g., packages), and/or may include selecting an applicable (e.g., latest) version. Selecting may be conforming to the control indicator, and/or the control indicator may provide the selection, and/or the selection may be carried out by the electronic control system, in particular a server and/or receiver of the control indicator.

The operation control information may be selected from a library or archive or database, which may be separate (e.g., physically separate) from the manufacturing equipment, e.g., such that operation control information in the archive or library may not be directly accessed for execution by the manufacturing equipment and/or may not be directly retrievable by the manufacturing equipment and/or its processing circuitry. However, cases in which the library is directly accessible for the manufacturing equipment and/or its processing circuitry, and/or included therein, may be considered, e.g., such that the library may be in a local memory of the manufacturing equipment.

Thus, suitable operation control information may be provided to the manufacturing equipment. Selecting may be based on requesting a confirmation from an operator; the request may be transferred to the operator, e.g., indicating the operation control information and/or size and/or version to the operator, and/or requesting confirmation of the selection.

In some cases, operating the manufacturing equipment may comprise obtaining operation control information based on the control indicator. For example, a distant or online archive or database may be contacted, e.g., for downloading a missing operation control information and/or an updated version. This may include checking for the availability of a new and/or updated version, e.g., based on the control indicator. Thus, desired operation control information may be provided even if not locally available. The obtained operation control information may be selected for the manufacturing equipment.

It may be considered that operating may comprise installing operation control information onto the manufacturing equipment based on the control indicator. In particular, selected operation control information may be installed. Installing may comprise transferring the operation control information to the manufacturing equipment, e.g., via a suitable communication interface, which may be provided between processing circuitry of the manufacturing device and/or the electronic device and/or electronic control system.

There is also considered an electronic device comprising processing circuitry. The electronic device is adapted for utilising the processing circuitry to perform a method as described herein, e.g., in the context of the electronic device.

The electronic device may in general be a portable electronic device, and/or a mobile phone and/or a tablet and/or a handheld device, and/or a PLC scanner (e.g., adapted to communicate via PLC signals). This may provide easy handling for an operator.

An electronic control system is proposed. The electronic control system is adapted to communicate with, and/or comprises, an electronic device as described herein, and/or may be adapted to perform a method as described herein. An electronic control system may comprise one or more control components, e.g., electronic controls or controllers or processing circuitry for a manufacturing equipment, and/or a server or server arrangement, which may be adapted to communicate with the electronic control of each associated manufacturing equipment.

A manufacturing equipment may be considered associated to an electronic control system and vice versa if the electronic control system may control the manufacturing equipment and/or provide software and/or (operation or other) control information thereto.

It may be considered that a manufacturing equipment is considered to be associated to an electronic control system if its electronic control may communicate with the server or server arrangement, e.g., via a suitable communication interface. The server and/or server arrangement may comprise processing circuitry, and/or may be adapted to manage an archive or library or database of operation control information for one or more manufacturing equipments and/or types thereof, and/or may be adapted for providing operation control information to be installed or used to a manufacturing equipment, for example, based on a control indicator. The electronic control system may in general be adapted to receive the control indicator from an electronic device.

There is also disclosed a computer program product comprising instructions, the instructions causing an electronic device and/or electronic control system to perform a method as described herein when executed on the electronic device and/or electronic control system and/or processing circuitry thereof. There may be considered a carrier medium arrangement storing and/or carrying the computer program product. In general, the instructions may be computer-readable and/or executable, in particular by processing circuitry, e.g., of an electronic control system and/or electronic device and/or a controller of a manufacturing equipment.

A program product may comprise a module for each action performed in a method. In particular, the program product may comprise a module for obtaining input and/or for second input, and/or a module for determining the input control information, and/or a module for providing the control indicator, and/or a module for determining the manufacturing equipment, and/or a module for operating the equipment, and/or a module for installing the operation control information and/or a module for retrieving and/or requesting and/or downloading the operation control information. In general, a computer program product may be distributed, and/or comprise a plurality of components and/or programs, which may be executable or executed on different electronic devices or circuitry. Such components may be adapted to be able to communicate with each other, e.g., via suitable communication interfaces.

Input or input control information may generally be obtained optically and/or via a camera, e.g., of the electronic device. The input may be represented by an information pattern, e.g., a barcode or QR code. The information pattern may generally visually or graphically represent and/or encode information, which may be extractable as input control information. An information pattern may be provided with and/or on an order, e.g., a printed document. In some cases, a second information pattern, and/or second input, may be provided at and/or on and/or pertaining to the manufacturing device. It may be considered that the input and second input are obtained separately, e.g., in two different obtaining or scanning or sensing actions, e.g., pertaining to a first information pattern and a second information pattern.

In general, there may be considered an order adapted to be operable with the approaches described herein. In particular, the order may be provided with, an information pattern, and/or a radio chip, e.g., an NFC chip, which may be attached to and/or printed on the order.

The method may especially be carried out, completely or in part, by electronic execution means like a computer system. To these ends, the method may be formulated as a computer program product with program code means or instructions. The above described system may comprise the computer system. Advantages or features of the method may apply to the method and vice versa.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Figure 1: shows an exemplary system with an electronic device according to the invention; and
- Figure 2: shows an exemplary flow diagram of an inventive method.

### Detailed Exemplary Embodiments of the Invention

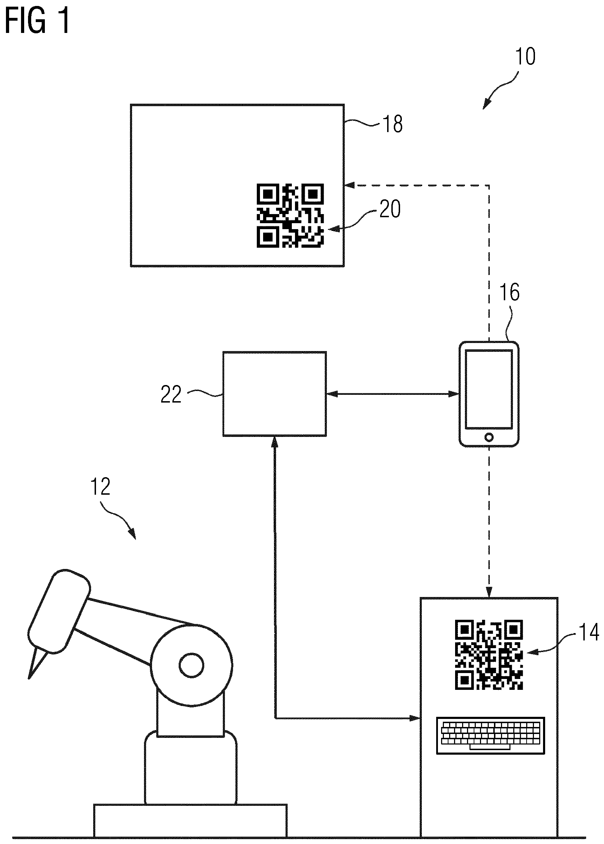

Figure 1 shows an exemplary manufacturing system 10, for example a shopfloor or manufacturing plant. One or more manufacturing equipments 12 may be provided. Each manufacturing equipment 12 may have associated to it a (second) information pattern 14, which may indicate the type and/or identity of the associated manufacturing equipment 12. Such an information pattern 14 may be arranged with good visibility, e.g., for easy scanning.

An electronic device 16 may be a portable electronic device, e.g., a smartphone or tablet or barcode reader or QR code reader. The electronic device 16 is adapted to communicate with an electronic control system, e.g., a server 22, and/or the one or more manufacturing equipments 12.

The communication may be over a wireless communication interface, e.g., a radio interface, which is indicated with a dashed line in Figure 1. In some cases, the electronic device 16 may communicate with the manufacturing equipment 12 and/or the electronic control system, utilising PLC (Programmable Logic Control) signals, e.g., via a communication interface. The electronic device 16 may allow manual user input for an operator concerning software and/or operation control information and/or PLC-based communication.

The electronic device 16 is adapted to obtain input control information from an order 18. Specifically, the input control information is obtained from an information pattern 20 associated to the order, e.g., printed thereon. The input control information may in particular obtained using a camera and/or code reader of the electronic device 16 (lines between the electronic device 16 and a pattern indicate line of sight and/or a radio pathway). Some code reader software or application like a QR reader or barcode reader may be utilised, e.g., to decode a camera image of an information pattern.

The electronic device 16 is adapted to provide, e.g., transmit, a control indicator to an electronic control system, which may comprise the server 22, and/or control electronics of the manufacturing equipment/s 12. The control indicator generally may represent input control information, and/or be identical to such, and/or refer to it, e.g., in a reformatted form. The control indicator in particular indicates operation control information to be used for operating a manufacturing equipment 12, e.g., to fulfil the order. In some cases, the electronic device 16 may be used to obtain second input control information from the second information pattern 14, e.g., by scanning it. The second input control information may represent the type and/or identity of the specific manufacturing equipment.

The electronic control device 16 may be adapted to determine whether the input control information and second input control information match, e.g., whether the type of the manufacturing equipment 12 are the same, and/or whether the manufacturing equipment 12 and the indicated operation control information or processing are compatible. If they do not match, a warning may be output to the operator, e.g., an audible and/or graphical and/or vibrational warning. If they match, this may be indicated to the operator as well, e.g., with an "OK" indication, and/or second input information may be indicated to the electronic control system, in particular with the control indicator.

The control indicator may indicate the second input control information, in particular the identity of the manufacturing equipment 12, and also indicates the operation control information to be used by this manufacturing equipment 12.

The receiver of the control indicator, e.g., a manufacturing equipment 12 and/or server 22, or the electronic control system in general, may be adapted to perform a match and/or check of the indicated information, e.g., as part of a method of operating the manufacturing equipment 12. A warning may be returned to the electronic device 16 if there is a mismatch of information, and/or if the indicated operation control information is not available or outdated.

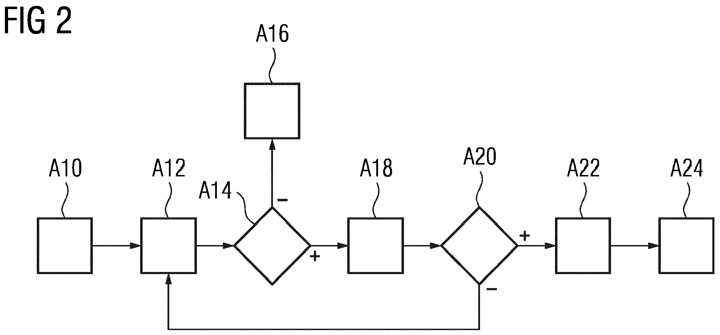

Figure 2 shows an exemplary flow diagram, e.g., for operating a system as shown in Figure 1. In an (optional) action A10, an order 18 may be provided, e.g., by an ordering system or an operator. In action A12, input control information indicated by the information pattern 20 of the order 18 is obtained. In some cases, in addition, information in a second information pattern 14 may be obtained. An operator may utilize the camera or a radio receiver, e.g., an NFC receiver, of an electronic device 16 to obtain the information.

A control indicator is determined and provided to the electronic control system, e.g., a different component of the electronic control system than the electronic device 16, and/or to a server 22, and/or to an electronic control of the manufacturing equipment 12.

In an action A14, which may be performed by the electronic control system based on the control indicator, in particular by the server 22, it may be checked whether the indicated operation control information is available, in particular a NC package or packet.

If not, in an action A16, a corresponding response may be transmitted to the electronic device 16, and/or output to the operator by the electronic device 16. The response may provide information indicating why the operation control information is not available and/or could not be provided or downloaded. The response may also indicate whether or not a mismatch occurred, e.g., that the operation control information is not available or accepted for the specific equipment or type of equipment. A corresponding check may be performed by the electronic control system and/or the server 22.

If yes, in an action A18, a response may be provided to electronic device 16 and/or the operator, which may represent a confirmation request. The response may indicate availability of the operation control information and/or a positive match or check, and/or may request the operator to confirm use or installation of the operation control information to the manufacturing equipment 12. The response may indicate the operation control information and/or operation control information version and/or installation status on the manufacturing equipment and/or size of the operation control information, and/or the equipment identity.

In an action A20, if the operator does not confirm, it may be returned to action A12, or A10, in some cases.

If the operator confirms, it may be branched to action A22, in which the operation control information may be installed and/or downloaded to the manufacturing equipment 12.

In an action A24, the operation control information may now be used for operating the manufacturing equipment 12 for a processing and/or manufacturing run.

According to approaches described herein, it may be avoided that a machine operator has to download a certain NC package to the machine, which may be needed to be found manually in a list of assigned NC packages, in front of the machine. In particular tediously scrolling through a possibly long list of available NC packages may be avoided. Also, operator needs to use the scroll bar, or use the keyboard to enter the name of the NC package. Usually, the panels in front of the machines don't have a computer mouse or typing in words is hard and a slow process. The approaches herein allow easy upgrade of functionality in particular for such legacy systems.

The approaches described allow minimizing the risk of a machine operator, due to some error, downloading the wrong NC package. To download the right NC package to machine, an electronic device like a PLC scanner or a mobile device (e. g. mobile phone / tablet) with a camera to find the required NC package on the work order sheet (the order) may be used.

The operation control information like a NC package, and the manufacturing equipment like the CNC machine, can be both identified by a visual or radio machine-readable form (e. g. information pattern like a bar code or QR code or identification tag or RFID chip and so on). An information pattern may represent the operation control information, e.g., an NC package, which may include one or multiple NC program files. All of these NC program files may be needed to produce the workpiece (or object or item) and/or to fulfil the work order, and the approaches may avoid the necessity for the operator need to identify and/or download each NC program file individually, but rather only the package itself.

Accordingly, improvement of the process to implement the download of a NC package for the operator or customer may be provided, in particular reducing the number of required actions. This may provide time saving for the operator and/or customer, e.g., for the whole data entering process, and/or may help avoiding mistakes when entering the data through the operator and/or customer.

Manufacturing equipment may represent one or more machines and/or material processing units. Manufacturing equipment may be adapted for manufacturing one or more objects or items, and/or process material and/or one or more objects or items. A manufacturing equipment may be one device, or a combination of devices, which may be operable with one operation control information, e.g., one NC package, and/or to perform one task (which may comprise subtasks) and/or may be controllable as one unit, e.g., by the same processing circuitry and/or accessing the same memory for operation. Different manufacturing equipments may be operable with different operation control information (or different copies thereof). A manufacturing equipment may represent a CNC machine or unit; an electronic control system may be connected to and/or control a plurality of manufacturing equipments.

Operation control information, like software, for a manufacturing equipment, in general may represent instructions or code, which may be executable by a manufacturing device, and/or processing circuitry and/or electronic control controlling the manufacturing device, in particular a controller or processor thereof, and/or based on which control of operation of the manufacturing device may be performed and/or carried out. For operation, the operation control information may, at least in part, stored or storable in a random access memory accessible to the processing circuitry. Operation control information may comprise and/or consist of one or more components or modules, in particular one module for each action to be performed in a method. Operation control information may represent, and/or be provided as, one or more packets or packages, e.g., of programs and/or data and/or instructions and/or code, e.g., an NC package. Operation control information may in particular refer to G-code.

A control indicator may represent and/or indicate information, in particular information like control information obtained or extracted from an information pattern. The control indicator may represent, and/or determined to represent, such information in a processed and/or reformatted and/or combined form, or an expanded form, and/or in an encoded and/or remapped form. Reformatting and/or remapping may comprise using a format for the communication interface used to provide the control indicator. Determining the control indicator may comprise performing any such action to achieve and/or provide and/or set up the control indicator based on the input control information and/or the information pattern/s.

Input control information may represent information pertaining to the control of manufacturing equipment, in particular indicating operation control information intended to be used and/or installed, e.g., to a particular piece of manufacturing equipment. It may be considered input due to being input for the electronic device, e.g., when obtaining the input control information.

An order may be provided in camera or radio-readable form, e.g., on a piece of paper. An information pattern may be imprinted on the order, and/or included or provided with the order. The order may in general indicate what to produce or manufacture, and/or on which equipment or type of equipment, and/or how much to manufacture, and/or which operation control information to use. The information pattern may represent all information represented in the order, or a part thereof, e.g., a machine-readable part or instructions for electronic control and/or manufacturing equipment. The order may comprise additional information, e.g., for an operator or higher-layer control system.

Circuitry may comprise and/or represent integrated circuitry. Processing circuitry may comprise one or more processors and/or controllers (e.g., microcontrollers), and/or ASICs (Application Specific Integrated Circuitry) and/or FPGAs (Field Programmable Gate Array), or similar. It may be considered that processing circuitry comprises, and/or is (operatively) connected or connectable to one or more memories or memory arrangements. A memory arrangement may comprise one or more memories. A memory may be adapted to store digital information. Examples for memories comprise volatile and non-volatile memory, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM). Memory may also be referred to as storage in some contexts.

Communication circuitry and/or a communication interface may comprise radio circuitry and/or cable circuitry. Communication circuitry generally may comprise one or more interfaces, which may be air interface/s and/or cable interface/s and/or optical interface/s, e.g., laser-based. Interface/s may be in particular packet-based. Cable circuitry and/or a cable interface may comprise, and/or be connected or connectable to, one or more cables (e.g., optical fibre-based and/or wire-based), which may be directly or indirectly (e.g., via one or more intermediate systems and/or interfaces) be connected or connectable to a target, e.g., controlled by communication circuitry and/or processing circuitry.

Any one, or all, of the modules disclosed herein may be implemented in software and/or firmware and/or hardware. Different modules may be associated to different components of a radio node, e.g., different circuitries or different parts of a circuitry. It may be considered that a module is distributed over different components and/or circuitries. A program product as described herein may comprise the modules related to a device on which the program product is intended (e.g., a user equipment or network node or manufacturing equipment or server or electronic device) to be executed (the execution may be performed on, and/or controlled by the associated circuitry).

A carrier medium arrangement may comprise one or more carrier media. Generally, a carrier medium may be accessible and/or readable and/or receivable by processing or control circuitry. Storing data and/or a program product and/or code may be seen as part of carrying data and/or a program product and/or code. A carrier medium generally may comprise a guiding/transporting medium and/or a storage medium. A guiding/transporting medium may be adapted to carry and/or carry and/or store signals, in particular electromagnetic signals and/or electrical signals and/or magnetic signals and/or optical signals.

A carrier medium, in particular a guiding/transporting medium, may be adapted to guide such signals to carry them. A carrier medium, in particular a guiding/transporting medium, may comprise the electromagnetic field, e.g., radio waves or microwaves, and/or optically transmissive material, e.g., glass fibre, and/or cable. A storage medium may comprise at least one of a memory, which may be volatile or non-volatile, a buffer, a cache, an optical disc, magnetic memory, flash memory, etc.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

### Reference List

- 10: manufacturing system
- 12: manufacturing equipment
- 14: (second) information pattern
- 16: electronic device
- 18: order
- 20: information pattern
- 22: server

## Claims

1. Method of operating an electronic device (16), the method comprising:
- obtaining input control information based on an information pattern (14, 20);
- determining a control indicator based on the input control information, the control indicator indicating operation control information to be used by a manufacturing equipment (12) ;
- providing the control indicator to an electronic control system of the manufacturing equipment (12).

2. Method according to claim 1, wherein the manufacturing equipment (12) is a Computerized Numerical Control, CNC, equipment, and/or the control indicator indicates Numerical Control, NC, operation control information.

3. Method according to one of the preceding claims, wherein the input control information is obtained based on optical sensing of the information pattern (14, 20), wherein the information may be represented by an information pattern (14, 20) like a barcode and/or QR code and/or identification tag and/or another graphical code.

4. Method according to one of the preceding claims, wherein the manufacturing equipment (12) is determined, and/or wherein the control indicator also indicates the manufacturing equipment (12).

5. Method according to one of the preceding claims, wherein the control indicator indicates operation control information executable by the manufacturing equipment (12) and/or operable to control the manufacturing equipment(12).

6. Method according to one of the preceding claims, wherein the control indicator indicates desired processing to be performed by the manufacturing equipment (12).

7. Method according to one of the preceding claims, wherein the control indicator comprises multiple entries.

8. Method according to one of the preceding claims, wherein the method also comprises operating the manufacturing equipment (12) based on the control indicator.

9. Method according to claim 8, wherein operating comprises selecting operation control information based on the control indicator.

10. Method according to one of claims 8 to 9, wherein operating comprises obtaining operation control information based on the control indicator.

11. Method according to one of claims 8 to 10, wherein operating comprises installing operation control information onto the manufacturing equipment (12) based on the control indicator.

12. Electronic device (16) comprising processing circuitry, the electronic device (16) being adapted for utilising the processing circuitry to perform a method according to one of claims 1 to 7.

13. Electronic device (16) according to claim 12, wherein the electronic device (16) is a portable electronic device and/or a mobile phone and/or a tablet and/or a handheld device.

14. Electronic control system, the electronic control system being adapted to communicate with, and/or comprising, an electronic device (16) according to one of claims 12 or 13.

15. Computer program product comprising instructions, the instructions causing an electronic device (16) and/or electronic control system to perform a method according to one of claims 1 to 11 when executed on the electronic device (16) and/or electronic control system.
